# EUROPEAN PATENT APPLICATION

(11) **EP 1 367 589 A2**
(43) Date of publication of application: **03.12.2003**
(21) Application number: 03252698.0
(22) Date of filing: 29.04.2003
(51) Int. Cl.: G11B 27/00

(54) **Audio data reproducing/recording apparatus, audio data reproducing/recording method, and information recorded medium**

(30) Priority: 30.05.2002 JP 2002157314
(71) Applicant: Pioneer Corporation, Tokyo-to (JP)
(72) Inventor: Denda, Akihiro, c/o Pioneer Corporation, Kawagoe-shi, Saitama-ken (JP); Sakamoto, Yuji, c/o Pioneer Corporation, Kawagoe-shi, Saitama-ken (JP); Nonaka, Yoshiya, c/o Pioneer Corporation, Kawagoe-shi, Saitama-ken (JP)
(74) Representative: Townsend, Victoria Jayne

(57) **Abstract**

An audio data reproducing/recording apparatus has a first reproducing device(1) which reproduces audio data recorded on a recording medium(10); a recording device (7) which records the reproduced audio data on another recording medium(11); a control device(8) which controls reproducing operation of the first reproducing device(1) and recording operation of the recording device (7) ; and a volume level calculation device (2) whichmeasures volume level of the reproduced audio data and calculates average volume level of the audio data to be recorded on the other recording medium(11) based on the measured volume level, wherein the control device(8) makes the volume level calculation device to calculate the average volume level when the reproduced audio data is recorded on the other recording medium(11).

## Description

### BACKGROUND OF THE INVENTION

### Field of the Invention:

The present invention relates to an audio data reproducing/recording apparatus which reproduces audio data recorded on a recording medium and records it to another recording medium. More particularly, it relates to technology for adjusting volume level and sound quality level of audio data reproduced from the other recording medium.

### Description of the Related Art:

With increases in capacity of recording medium such as HD (Hard Disk) and advancements in data compression technologies such as MP3 (MPEG Audio Layer 3) and ATRAC3 (Adaptive TRansform Acoustic Coding 3), users can now record music (audio data) contained in a number of CDs (Compact Discs) or MDs (Mini Discs) to one recording medium (e.g., HD) using an audio data reproducing/recording apparatus (audio player) to prepare a collection of music.

When the music is played back from recording medium containing a lot of music, any difference in the volume level of music among the recording media, for example, will make it difficult for the user to listen to the music successively.

It is known that some conventional audio data reproducing/recording apparatuses which pass music from a source medium to a target medium in analog format can record the music on the target medium after adjusting the volume of the music to the one set by the user.

On the other hand, most of the conventional audio data reproducing/recording apparatuses which pass music from a source medium to a target medium in digital format record music on the target medium at the original volume, attaching importance to sound quality without adjusting the volume of the music, but it is known that some expensive, high-function audio data reproducing/recording apparatuscan record the music on the target medium after adjusting the volume of the music to the one set by the user.

However, if, for example, the target medium has a large capacity and the music is recorded to it a number of times additionally at some intervals (e.g. , the user copies music each time he/she buys a CD), as a plurality of music are recorded, the volume level may gradually change. This also makes it difficult for the user to listen to the music successively.

Also, conventional audio data reproducing/recording apparatuses record the music (originalmusic) recorded on a source medium to the target medium by changing the volume level of the original music. This can cause inconvenience in sound quality.

The above-mentioned facts also apply to the sound quality level of music.

### SUMMARY OF THE INVENTION

It is therefore an object of the present invention to provide an audio data reproducing/recording apparatus and an audio data reproducing/recording method capable of more simply and effectively adjusting volume level or sound quality level for a plurality of reproduced music data.

The above object of the present invention can be achieved by an audio data reproducing/recording apparatus provided with: a first reproducing device which reproduces audio data recorded on a recording medium; a recording device which records the reproduced audio data on another recording medium; a control device which controls reproducing operation of the first reproducing device and recording operation of the recording device; and a volume level calculation device which measures volume level of the reproduced audio data and calculates average volume level of the audio data to be recorded on the other recording medium based on the measured volume level, wherein the control device makes the volume level calculation device to calculate the average volume level when the reproduced audio data is recorded on the other recording medium.

Here, for example, the recording medium may be CD, DVD (Digital Versatile Disc), MD, MO, HD, or card-type recording medium. For example, the other recording medium may be HD, CD-R, DVD-R/W, MD, MO, or card-type recording medium.

According to the present invention, when the audio data recorded on the other recording medium is reproduced (played back) later, the volume level of a plurality of reproduced audio data can be adjusted more easily and effectively using the calculated average volume level. Moreover, thus, the reproduced audio data can be recorded on the other recording medium at the original volume. In other words, a plurality of audio data with different volume levels can be recorded on the other recording medium.

In one aspect of the audio data reproducing/recording apparatus of the present invention, the apparatus has a memory for storing the calculated average volume level.

According thisaspect,since the calculated average volume level is stored in the memory, when the audio data recorded on the other recording medium is reproduced later, the volume can be corrected using the stored average volume level.

In another aspect of the audio data reproducing/recording apparatus of the present invention, the volume level calculation device calculates the average volume level based on an average volume level already stored in the memory and the measured volume level; and the average volume level already stored in the memory is updated to the calculated average volume level.

According this aspect, since the average volume level of the audio data can also be calculated using an average volume level calculated before, the average volume level of all the audio data including the audio data recorded before can be calculated even if the audio data is recorded on the other recording medium a number of times additionally at some intervals.

In further aspect of the audio data reproducing/recording apparatus of the present invention, the apparatus has: a second reproducing device which reproduces the audio data recorded on the other recording medium; a volume correction device which corrects volume of the audio data reproduced from the other recording medium based on the average volume level and outputs the audio data at the corrected volume.

According this aspect, even if a plurality of audio data with different volume levels are recorded on the other recording medium, when the audio data are reproduced successively, they are reproduced with corrections made using the average volume level calculated at the time of recording. Consequently, the user can listen to music in a natural manner for a long period of time without being aware of volume differences.

The above object of the present invention can be achieved by an audio data reproducing/recording apparatus provided with: a first reproducing device which reproduces audio data recorded on recording medium; a recording device which records the reproduced audio data on another recording medium; a control device which controls reproducing operation of the first reproducing device and recording operation of the recording device; and a sound quality level calculation device which measures sound quality level of the reproduced audio data and calculates average sound quality level of the audio data to be recorded on the other recording medium based on the measured sound quality level, wherein the control device makes the sound quality level calculation device to calculate the average sound quality level when the reproduced audio data is recorded on the other recording medium.

According to the present invention, when the audio data recorded on the other recording medium is reproduced (played back) later, the sound quality level of a plurality of reproduced audio data can be adjusted more easily and effectively using the calculated average sound quality level. Moreover, thus, the reproduced audio data can be recorded on the other recording medium at the original sound quality. In other words, a plurality of audio data with different sound quality levels can be recorded on the other recording medium.

In one aspect of the audio data reproducing/recording apparatus of the present invention, the apparatus has a memory for storing the calculated average sound quality level.

According this aspect, since the calculated average sound quality level is stored in the memory, when the audio data recorded on the other recording medium is reproduced later, the sound quality can be corrected using the stored average sound quality level.

In another aspect of the audio data reproducing/recording apparatus of the present invention, the sound quality level calculation device calculates the average sound quality level based on an average sound quality level already stored in the memory and the measured sound quality level; and the average sound quality level already stored in the memory is updated to the calculated average sound quality level.

According this aspect, since the average sound quality level of the audio data can also be calculated using an average sound quality level calculated before, the average sound quality level of all the audio data including the audio data recorded before can be calculated even if the audio data are recorded on the other recording medium a number of times additionally at some intervals.

In further aspect of the audio data reproducing/recording apparatus of the present invention, the apparatus has: a second reproducing device which reproduces the audio data recorded on the other recording medium; a sound quality correction device which corrects the sound quality of the audio data reproduced from the other recording medium based on the average sound quality level and outputs the audio data at the corrected sound quality.

According this aspect, even if a plurality of audio data with different sound quality levels are recorded on the other recordingmedium,when the audio data are reproduced successively, they are reproduced with corrections made using the average sound quality level calculated at the time of recording. Consequently, the user can listen to music in a natural manner for a long period of time without being aware of sound quality differences.

The above object of the present invention can be achieved by an audio data reproducing/recording method for reproducing audio data recorded on recording medium and recording the reproduced audio data on another recording medium, provided with: a process of measuring volume level of the reproduced audio data when the reproduced audio data is recorded on the other recording medium; and a process of calculating average volume level of the audio data to be recorded on the other recording medium based on the measured volume level.

In one aspect of the audio data reproducing/recording method of the present invention, the method includes a process of reproducing the audio data recorded on the other recording medium; a process of correcting volume of the audio data reproduced from the other recording medium based on the average volume level; and a process of outputting the audio data at the corrected volume.

The above object of the present invention can be achieved by an audio data reproducing/recording method for reproducing audio data recorded on recording medium and recording, the reproduced audio data on another recording medium, provided with: a process of measuring sound quality level of the reproduced audio data when the reproduced audio data is recorded on the other recording medium; and a process of calculating average sound quality level of the audio data to be recorded on the other recording medium based on the measured sound quality level.

In one aspect of the audio data reproducing/recording method of the present invention, the method includes process of reproducing the audio data recorded on the other recording medium; a process of correcting the sound quality of the audio data reproduced from the other recording medium based on the average sound quality level; and a process of outputting the audio data at the corrected sound quality.

The above object of the present invention can be achieved by an information recorded medium wherein a program for a computer for reproducing audio data recorded on recording medium and recording the reproduced audio data on another recording medium, is recorded so as to be read by the computer, the program makes the computer function as: measuring volume level of the reproduced audio data when the reproduced audio data is recorded on the other recording medium; and calculating average volume level of the audio data to be recorded on the other recording medium based on the measured volume level.

In one aspect of the information recorded medium of the present invention, the program further makes the computer function as correcting volume of the audio data reproduced from the other recording medium based on the average volume level when the audio data recorded on the other recording medium is reproduced; and outputting the audio data at the corrected volume.

The above object of the present invention can be achieved by an information recorded medium wherein a program for a computer for reproducing audio data recorded on recording medium and recording the reproduced audio data on another recording medium, is recorded so as to be read by the computer, the program makes the computer function as: measuring sound quality level of the reproduced audio data when the reproduced audio data is recorded on the other recording medium; and calculating average sound quality level of the audio data to be recorded on the other recording medium based on the measured sound quality level.

In one aspect of the information recorded medium of the present invention, the program further makes the computerfunction as correcting sound quality of the audio data reproduced from the other recording medium based on the average sound quality level when the audio data recorded on the other recording medium is reproduced; and outputting the audio data at the corrected sound quality.

### BRIEF DESCRIPTION OF THE DRAWINGS

FIG. 1 is a schematic block diagram of an audio apparatus;
FIG. 2 is a flowchart showing processes performed by a controller 8 when audio data recorded on a CD 10 is reproduced and recorded on an HD 11;
FIG. 3 is a flowchart showing processes performed by a DSP 2 when the audio data recorded on the CD 10 is reproduced and recorded on the HD 11;
FIG. 4 is a flowchart showing processes performed by the controller 8 when the audio data recorded on the HD 11 is reproduced; and
FIG. 5 is a flowchart showing processes performed by the DSP 2 when the audio data recorded on the HD 11 is reproduced.

### DETAILED DESCRIPTION OF THE PREFERRED EMBODIMENTS

Preferred embodiments of the present invention will be described with reference to the accompanying drawings. Incidentally, described below are embodiments in which an audio data reproducing/recording apparatus according to the present invention is applied to an audio apparatus (audio player).

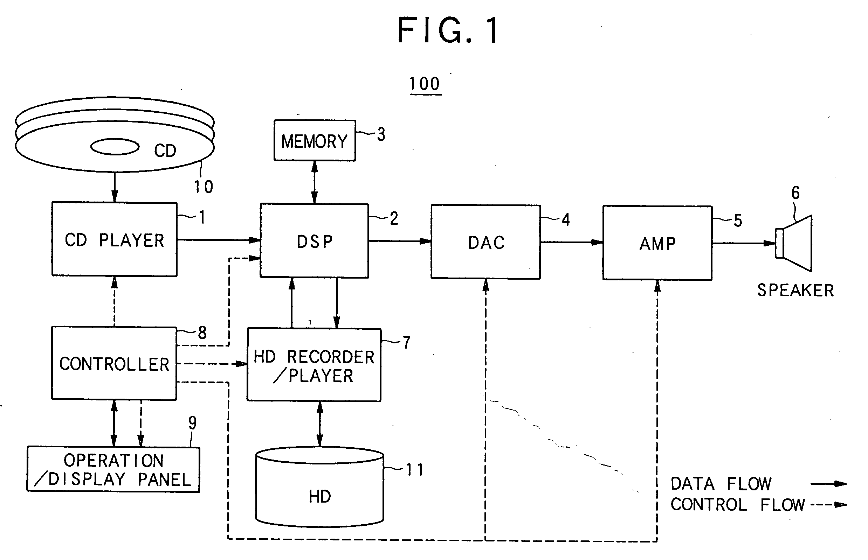

First, configuration and functions of the audio apparatus according to this embodiment will be described with reference to FIG. 1.

FIG. 1 is a schematic block diagram of the audio apparatus. As shown in FIG. 1, the audio apparatus 100 includes a CD player 1 as a first reproducing device which reproduces audio data recorded on a CD 10 as a recording medium, a DSP (digital signal processor) 2 which outputs the audio data reproduced by the CD player 1 after performing digital signal processing on them at high speed, a memory 3 for storing average volume level of the audio data described later, a DAC (Digital-to-Analog Converter) 4 which performs digital-to-analog conversion on the audio data outputted from the DSP 2 and outputs the resulting analog audio signal, an AMP (Amplifier) 5 which amplifies the analog audio signal outputted from the DAC 4 and outputs the resulting signal, a speaker 6 which outputs the analog audio signal from the AMP 5 as sound wave, an HD recorder/player 7 which records the audio data from the DSP 2 on the HD 11 as another recording medium or reproduces audio data recorded on the HD 11, a controller 8 as control device which controls operation of the above components, and an operation/display panel 9 which receives user commands (instructions) (e.g. , reproducing command and recording command) and outputs them to the controller 8 or displays information about the audio data recorded on the CD 10 or HD 11.

The CD player 1 has a mounting mechanism for mounting the CD 10, a pickup for optically reading audio data recorded on the CD 10, a spindle motor for rotationally driving the CD 10, a servo circuit for servo-controlling the spindle motor and pickup, etc. A plurality of CDs can be mounted on the mounting mechanism of the CD player 1 according to this embodiment. In that case, the CD player 1 reproduces audio data from one of the mounted CDs under the instruction of the controller 8 . Also, although the CD player 1 is applied to this embodiment as an example of a first reproducing device of the present invention, the present invention is not limited to this and may use a DVD player for reproducing audio data recorded on DVD, MD player for reproducing audio data recorded on MD, card medium player for reproducing audio data recorded on card-type recording medium such as memory stick, or a combination thereof.

The HD recorder/player 7 has a buffer memory, HDD (Hard Disk Drive) , etc. and functions as a recording device and a second reproducing device of the present invention. The audio data outputted from the DSP 2 is stored temporarily in the buffer memory, and then recorded on the HD 11 by the HDD. The audio data reproduced from the HD 11 is stored temporarily in the buffer memory, and then output to the DSP 2. Also, although the HD recorder/player 7 is applied to this embodiment as an example of the recording device and the second reproducing device of the present invention, the present invention is not limited to this and may use CD-R recorder/player for recording and reproducing audio data to/from a CD-R, DVD-R/W recorder/player for recording and reproducing audio data to/from a DVD-R/W, card medium player for recording and playing back audio data to/from card-type recording medium such as memory stick, or a combination thereof.

The DSP 2 has a logic circuit and memory circuit. It performs digital signal processing on the audio data reproduced by the CD player 1. Specifically, it performs known acoustic treatment such as EFM (Eight to Fourteen Modulation) to the audio data of RF (Radio Frequency) signal reproduced by the CD player 1. Then, it outputs the audio data to the DAC 4 and the HD recorder/player 7. A program for this process is stored in the memory circuit of the DSP 2. The memory circuit also stores an average volume level calculation program, the DSP 2 as the computer functions as a volume level calculation device and a volume level correction device by the average volume level calculation program.

More specifically, the DSP 2 which functions as the volume level calculation device measures the volume level of the audio data reproduced from the CD 10 and calculates the average volume level of the audio data to be recorded on the HD 11 based on the measured volume level. The calculated average volume level is stored in the memory 3. Incidentally, for example a non-volatile memory such as EEPROM (Electrically Erasable Programmable Read Only Memory) is applied to the memory 3

If an average volume level has already been stored in the memory 3, the DSP 2 calculates the average volume level of the audio data based on the stored average volume level andmeasured volume level, and thereby updates the average volume level stored in the memory 3 with the calculated average volume level.

Besides, the DSP 2 which functions as the volume correction device corrects volume of the audio data reproduced from the HD 11, based on the average volume level stored in the memory 3, and outputs the audio data at the corrected volume to the DAC 4.

The controller 8 has a CPU which has arithmetic capabilities, working RAM, ROM, etc. It controls reproducing operation of the CD player 1 and recording and reproducing operation of the HD recorder/player 7 at the instruction of the operation/display panel 9. Also, the controller makes the DSP 2 to calculate the average volume level when the audio data reproduced from the CD 10 is recorded on the HD 11.

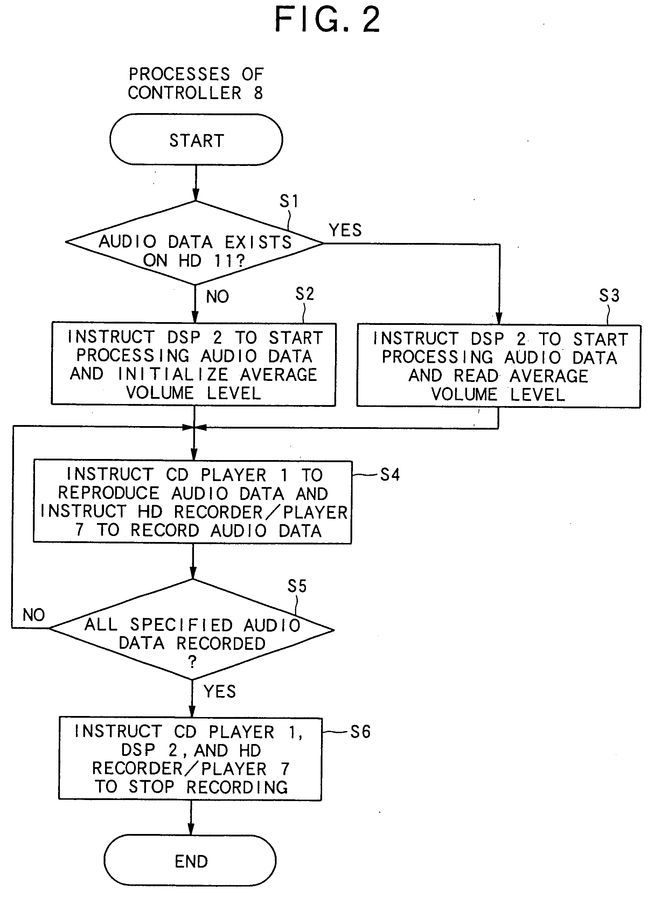

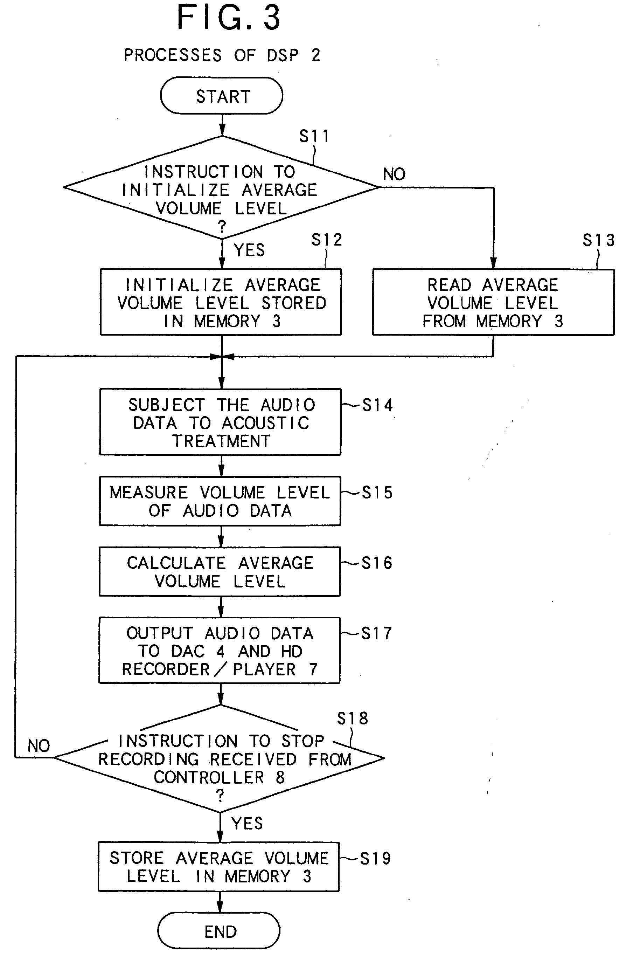

Next, with reference to FIGS. 2 and 3, description will be given of operation performed by the audio apparatus when the audio data recorded on the CD 10 is reproduced and recorded on the HD 11.

FIG. 2 is a flowchart showing processes performed by the controller 8 when the audio data recorded on the CD 10 is reproduced and recorded on the HD 11. FIG. 3 is a flowchart showing processes performed by the DSP 2 when the audio data recorded on the CD 10 is reproduced and recorded on the HD 11.

When the user specifies a plurality of desired audio data items (music) contained in a CD (e.g., by using a programmed reproducing function) and gives a record command on the operation/display panel 9, the controller 8 starts the processes shown in FIG. 2.

Referring to FIG. 2, the controller 8 makes an inquiry to the HD recorder/player 7 and judges whether any audio data has already been recorded on the HD 11 (Step S1) . If it is judged that no audio data has been recorded on the HD 11, the controller 8 instructs the DSP 2 to start processing audio data and initialize the average volume level (Step S2). On the other hand, if it is judged that audio data have already been recorded on the HD 11, the controller 8 instructs the DSP 2 to start processing the audio data and read the average volume level (Step S3) . Upon being instructed by the controller 8 to start processing the audio data, the DSP 2 starts the processes shown in FIG. 3.

Next, the controller 8 instructs the CD player 1 to reproducing the audio data specified above and instructs the HD recorder/player 7 to record the audio data (Step S4). Upon being instructed to reproducing the audio data, the CD player 1 starts reproducing the audio data recorded on the CD 10 and specified by the controller 8. Upon being instructed to record the audio data, the HD recorder/player 7 prepares to record the audio data.

Step S4 above is repeated until all the specified audio data have been recorded (Step S5).

In the processes of the DSP 2 shown in FIG. 3, first, the DSP 2 j udges whether the instruction received is an instruction to initialize the average volume level (Step S11) . If it is an instruction to initialize the average volume level, the DSP 2 initializes the average volume level stored in the memory 3 (Step S12). That is, the DSP 2 clears any average volume level remaining in the memory 3.

If the instruction received is not an instruction to initialize the average volume level, meaning that it is an instruction to read the average volume level, the DSP 2 reads the average volume level from the memory 3 (Step S13). Then, the DSP 2 subjects the audio data reproduced by the CD player 1 to the acoustic treatment described above (Step S14). Then, the DSP 2 measures the volume level of the audio data (Step S15) . For example, the DSP 2 converts peak signal levels of the inputted audio data in regular time intervals into 8-bit, 256-level numeric values and averages the peak signal levels to obtain the volume level of the audio data.

Next, based on the measured volume level of the audio data, the DSP 2 calculates the average volume level of the audio data (Step S16) . For example, the DSP 2 holds the measured volume level of each audio data, adds the held volume levels and divides the sum by the number of audio data items whenever necessary, and thereby calculates the average volume level. Then, the DSP 2 outputs the audio data to the DAC 4 and the HD recorder/player 7 (Step S17) . Incidentally, Step S17 may be performed prior to Step S16.

If the average volume level is read in Step S13 above, the DSP 2 averages the volume level measured in Step S15 and the average volume level, and thereby calculates a new average volume level. On the other hand, if the average volume level is initialized in Step S12 and only a single audio data item is specified by the controller 8, the calculated volume level becomes the average volume level.

The DSP 2 repeats the processes from Steps S14 to S17 until it is instructed by the controller 8 to stop recording (Step S18). Specifically, the DSP 2 measures the volume level of inputted audio data, calculates the average volume level, and outputs the calculated average volume level to the DAC 4 and the HD recorder/player 7 repeatedly (in regular processing cycles) until it is instructedby the controller 8 to stop recording. Consequently, even if a plurality of audio data items with different volume levels are input in the DSP 2 , the average volume level over all the audio data can be calculated before an instruction to stop recording is received from the controller 8.

Thus, the audio data outputted from the DSP 2 are output via the DAC 4, AMP 5 and speaker 6. Also, they are recorded on the HD 11 by the HD recorder/player 7.

The volume levels of the audio data recorded on the HD 11 are the same as they were when the audio data was recorded on the CD 10. In other words, a plurality of audio data items with different volume levels are recorded on the HD 11.

Returning to FIG. 3 , if it is judged that all the specified audio data have been recorded (Step S5) , the controller 8 instructs the CD player 1, the DSP 2, and the HD recorder/player 7 to stop recording (Step S6) . This ends the reproducing operation of the CD player 1 and the recording and reproducing operation of the HD recorder/player 7.

As shown in FIG . 4 , upon being instructed by the controller 8 to stop recording (Step S18 ) , the DSP 2 stores the final calculated average volume level in the memory 3 (Step S19) . Incidentally, if the average volume level has already been stored in the memory 3, the average volume stored in the memory 3 is updated to the final calculated average volume level.

In this way, the memory 3 stores the average volume level of the audio data recorded on the HD 11 and each time audio data is added to the HD 11 subsequently, the average volume level stored in the memory 3 is used.

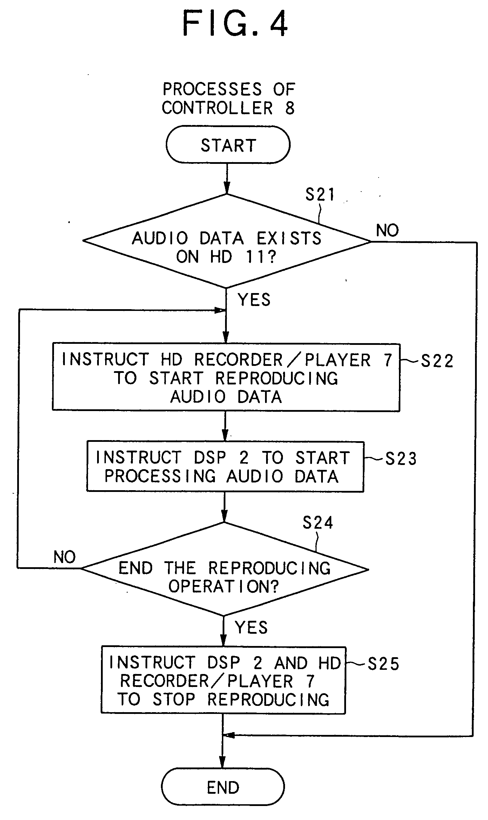

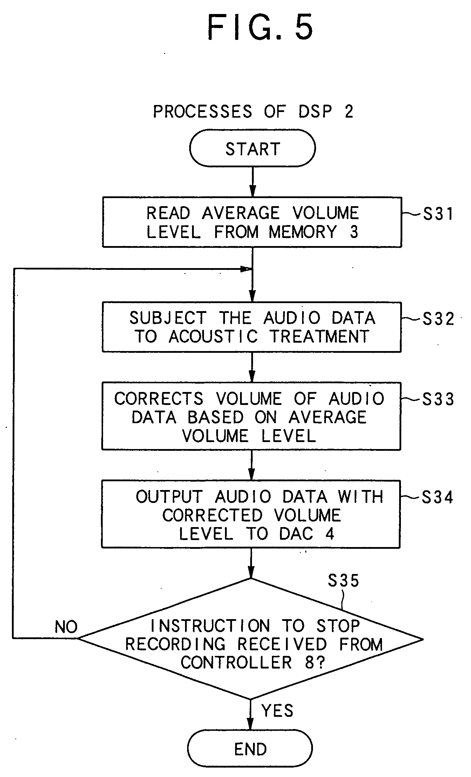

Next, with reference to FIGS. 4 and 5, description will be given of operation performed by the audio apparatus when the audio data recorded on the HD 11 is reproduced.

FIG. 4 is a flowchart showing processes performed by the controller 8 when the audio data recorded on the HD 11 is reproduced. FIG. 5 is a flowchart showing processes performed by the DSP 2 when the audio data recorded on the HD 11 is reproduced.

When the user gives a command on the operation/display panel 9 to reproducing the audio data recorded on the HD 11, the controller 8 starts the processes shown in FIG. 4.

Referring to FIG. 4, the controller 8 makes an inquiry to the HD recorder/player 7 and judges whether any audio data has already been recorded on the HD 11 (Step S21). If no audio data has been recorded on the HD 11, the controller 8 ends the given process. On the other hand, if audio data have already been recorded on the HD 11, the controller 8 instructs the HD recorder/player 7 to start reproducing the audio data (Step S22) . In response, the HD recorder/player 7 starts reproducing the audio data recorded on the HD 11.

Then, the controller 8 instructs the DSP 2 to start processing the audio data (Step S23) . Upon being instructed by the controller 8 to start processing the audio data, the DSP 2 starts the processes shown in FIG. 5.

Incidentally, the processes from Steps S22 to S23 are repeated until the reproducing operation finishes (e.g., until all the audio data recorded on the HD 11 have been reproduced or until the user issues a stop reproducing command on the operation/display panel 9) (Step S24).

In the processes of the DSP 2 shown in FIG. 5, first, the DSP 2 reads the average volume level from the memory 3 (Step S31) . Then, the DSP 2 subjects the audio data reproduced by the HD recorder/player 7 to acoustic treatment (Step S32). Then, the DSP 2 corrects volume of the audio data based on the average volume level (Step S33) and outputs it to the DAC 4 (Step S34) . In other words, the DSP 2 corrects the volume level of the audio data toward the average volume level. The DSP 2 repeats Steps S32 to S34 until it is instructed by the controller 8 to stop reproducing (Step S35). The audio data outputted to the DAC 4 are output via the AMP 5 and speaker 6. In this way, even if a plurality of audio data items (music pieces) with different volume levels are recorded on the HD 11, the individual audio data items are corrected by the average volume level and are output at an averaged volume.

Returning to FIG. 4, if the controller 8 determines to end the reproducing operation (Step S24) , it instructs the DSP 2 and HD recorder/player 7 to end reproducing (Step S25). This ends the processes of the DSP 2 shown in FIG. 3 and the reproducing operation of the HD recorder/player 7.

As described above, according to this embodiment, even if a plurality of audio data items (music pieces) with different volume levels are recorded on the HD 11, when the audio data are reproducedsuccessively,they are reproduced withcorrections made using the average volume level calculated at the time of recording. Consequently, the user can listen tomusic in a natural manner for a long period of time without being aware of volume differences.

Also, even if audio data are recorded a number of times additionally at some intervals, they are reproduced with corrections made using the average volume level calculated at the time of recording. Consequently, the user can listen to music in a natural manner for a long period of time without being aware of volume differences.

Furthermore, since the audio data are recorded on the HD 11 at the original volume level, there is no inconvenience with sound quality.

According to the above embodiment, which pays attention to the volume of audio data, the volume of the audio data outputted is corrected with average volume level. In another embodiment, attention may be paid to the sound quality of audio data. In that case, the sound quality of the reproduced audio data is corrected with average sound quality level. The configuration shown in FIG. 1 can be applied to such an embodiment. However, instead of the average volume level calculation program, an average sound quality level calculation program will be incorporated into the DSP 2. Then, the DSP 2 will function as a sound quality level calculation device for measuring the sound quality level of the audio data reproduced from the CD 10 and calculating the average sound quality level of the audio data to be recorded on the HD 11 based on the measured sound quality level, and a sound quality correction device for correcting the sound quality of the audio data reproduced from the HD 11 based on the average sound quality level stored in the memory 3 and outputting the audio data at the corrected sound quality. Known technology can be used to measure the sound quality level and the average sound quality level of the audio data . Other processes are the same as those in the flowcharts of FIGS. 2 to 5.

With this configuration, even if a plurality of audio data items (music pieces) with different sound quality levels are recorded on the HD 11, when the audio data is reproduced successively, they are reproduced with corrections made using the average sound quality level calculated at the time of recording. Consequently, the user can listen to music in a natural manner for a long period of time without being aware of sound quality differences.

Incidentally, according to the embodiments described above, the average volume level or average sound quality level are stored in the memory 3 separate from the HD 11. However, these average levels may be stored in a predetermined recording area of the HD 11. In that case, the HD 11 will correspond to the memory as referred to herein.

Also, according to the embodiments described above, the single controller 8 controls both reproducing operation of the CD player 1 and recording and reproducing operation of the HD recorder/player 7. However, two controllers may be provided to control these operations separately. In that case, the two controllers will do so in synchronization with each other.

Also, according to the embodiments described above, the single DSP 2 both measures the volume level or sound quality level and calculates the average volume level or average sound quality level. However, two DSPs may be provided, with one of them undertaking the measurement and the other undertaking the calculation.

Also, according to the embodiments described above, audio data are recorded as they are on the HD 11. However, they may be recorded after being compressed in the MP3, ATRAC3 , or other format or after being encrypted (encoded) for copyright protection.

Also, although an example of recording in digital format has been described above, the present invention can also be applied to recording in analog format by adding an A/D converter or the like.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An audio data reproducing/recording apparatus**characterized in that** the apparatus(100) comprises:
a first reproducing device (1) which reproduces audio data recorded on a recording medium(10);
a recording device (7) which records the reproduced audio data on another recording medium(11);
a control device (8) which controls reproducing operation of the first reproducing device(1) and recording operation of the recording device(7); and
a volume level calculation device (2) which measures volume level of the reproduced audio data and calculates average volume level of the audio data to be recorded on the other recording medium(11) based on the measured volume level,
wherein the control device(8) makes the volume level calculation device to calculate the average volume level when the reproduced audio data is recorded on the other recording medium ( 11 ) .

2. The audio data reproducing/recording apparatus(100) according to claim 1, comprising a memory(3) for storing the calculated average volume level.

3. The audio data reproducing/recording apparatus(100) according to claim 2, wherein:
the volume level calculation device(2) calculates the average volume level based on an average volume level already stored in the memory(3) and the measured volume level; and
the average volume level already stored in the memory (3) is updated to the calculated average volume level.

4. The audio data reproducing/recording apparatus(100) according to any one of claims 1 to 3, comprising:
a second reproducing device (7) which reproduces the audio data recorded on the other recording medium(11);
a volume correction device(2) which corrects volume of the audio data reproduced from the other recording medium(11) based on the average volume level and outputs the audio data at the corrected volume.

5. An audio data reproducing/recording apparatus **characterized in that** the apparatus (100) comprises:
a first reproducing device (1) which reproduces audio data recorded on a recording medium (10);
a recording device (7) which records the reproduced audio data on another recording medium (11);
a control device (8) which controls reproducing operation of the first reproducing device (1) and recording operation of the recording device (7); and
a soundquality level calculation device (2) whichmeasures sound quality level of the reproduced audio data and calculates average sound quality level of the audio data to be recorded on the other recording medium (11) based on the measured sound quality level,
wherein the control device (8) makes the sound quality level calculation device to calculate the average sound quality level when the reproduced audio data is recorded on the other recording medium (11).

6. The audio data reproducing/recording apparatus (100) according to claim 5, comprising a memory (3) for storing the calculated average sound quality level.

7. The audio data reproducing/recording apparatus (100) according to claim 6, wherein:
the sound quality level calculation device (2) calculates the average sound quality level based on an average sound quality level already stored in the memory (3) and the measured sound quality level; and
the average sound quality level already stored in the memory (3) is updated to the calculated average sound quality level.

8. The audio data reproducing/recording apparatus (100) according to any one of claims 5 to 7, comprising:
a second reproducing device (7) which reproduces the audio data recorded on the other recording medium;
a sound quality correction (2) device which corrects sound quality of the audio data reproduced from the other recording medium (11) based on the average sound quality level and outputs the audio data at the corrected sound quality.

9. An audio data reproducing/recording method for reproducing audio data recorded on recording medium (10) and recording the reproduced audio data on another recording medium (11), **characterized in that** the method comprises:
a process of measuring volume level of the reproduced audio data when the reproduced audio data is recorded on the other recording medium (11); and
a process of calculating average volume level of the audio data to be recorded on the other recording medium (11) based on the measured volume level.

10. The audio data reproducing/recording method according to claim 9, comprising:
a process of reproducing the audio data recorded on the other recording medium (11);
a process of correcting volume of the audio data reproduced from the other recording medium (11) based on the average volume level; and
a process of outputting the audio data at the corrected volume.

11. An audio data reproducing/recording method for reproducing audio data recorded on recording medium and recording the reproduced audio data on another recording medium (11) **characterized in that** the method comprises:
a process of measuring sound quality level of the reproduced audio data when the reproduced audio data,is recorded on the other recording medium (11); and
a process of calculating average sound quality level of the audio data to be recorded on the other recording medium (11) based on the measured sound quality level.

12. The audio data reproducing/recording method according to claim 11, comprising:
a process of reproducing the audio data recorded on the other recording medium (11);
a process of correcting sound quality of the audio data reproduced from the other recording medium (11) based on the average sound quality level; and
a process of outputting the audio data at the corrected sound quality.

13. An information recorded medium wherein a program for a computer for reproducing audio data recorded on recording medium (10) and recording the reproduced audio data on another recording medium (11) , is recorded so as to be read by the computer, the program makes the computer function as:
measuring volume level of the reproduced audio data when the reproduced audio data is recorded on the other recording medium (11); and calculating average volume level of the audio data to be recorded on the other recording medium (11) based on the measured volume level.

14. The information recorded medium according to claim 13, wherein the program further makes the computer function as:
correcting volume of the audio data reproduced from the other recording medium (11) based on the average volume level when the audio data recorded on the other recording medium (11) is reproduced; and outputting the audio data at the corrected volume.

15. An information recorded medium wherein a program for a computer for reproducing audio data recorded on recording medium (10) and recording the reproduced audio data on another recording medium (11) , is recorded so as to be read by the computer, the program makes the computer function as:
measuring sound quality level of the reproduced audio data when the reproduced audio data is recorded on the other recording medium (11) ; and calculating average sound quality level of the audio data to be recorded on the other recording medium (11) based on the measured sound quality level.

16. The information recorded medium according to claim 15, wherein the program further makes the computer function as:
correcting sound quality of the audio data reproduced from the other recording medium (11) based on the average sound quality level when the audio data recorded on the other recording medium (11) is reproduced; and outputting the audio data at the corrected sound quality.
